# EUROPEAN PATENT SPECIFICATION

(11) **EP 4 015 783 B1**
(45) Date of publication and mention of the grant of the patent: **29.01.2025**
(21) Application number: 20215655.0
(22) Date of filing: 18.12.2020
(51) Int. Cl.: F01D 21/00, F01D 21/12, F02C 9/28, F01D 17/08

(54) **GAS TURBINE ENGINE WITH FLAME FAILURE PROTECTION BASE ON EXHAUST GAS TEMPERATURE AND METHOD OF OPERATING A GAS TURBINE ENGINE**
GASTURBINENMOTOR MIT FLAMMENAUSFALLSCHUTZ AUF BASIS DER ABGASTEMPERATUR UND VERFAHREN ZUM BETREIBEN EINES GASTURBINENMOTORS
MOTEUR À TURBINE À GAZ COMPORTANT UNE PROTECTION CONTRE L'EXTINCTION DE LA FLAMME BASÉE SUR LA TEMPÉRATURE DES GAZ D'ÉCHAPPEMENT ET PROCÉDÉ DE FONCTIONNEMENT D'UN MOTEUR À TURBINE À GAZ

(43) Date of publication of application: 22.06.2022
(73) Proprietor: Ansaldo Energia Switzerland AG, 5400 Baden (CH)
(72) Inventor: SMITH, Richard, 5408 ENNETBADEN (CH); SINGLA, Ghislain, 3013 BERN (CH)
(74) Representative: Studio Torta S.p.A.

(56) References cited:
- EP-A1- 3 374 982
- JP-A- 2007 162 531
- US-A1- 2015 267 591
- US-B2- 8 474 269

## Description

### TECHNICAL FIELD

The present invention relates to a gas turbine engine with flame failure protection base on exhaust gas temperature and to a method of operating a gas turbine engine.

### BACKGROUND

As known, flame monitoring is a critical issue in gas turbine engines, because unexpected flame extinction at one or more burners may lead to loss in efficiency and, in the worst case, cause unburnt fuel in the exhaust and possibly explosion.

In annular combustors, flame monitoring is often accomplished by optical flame detectors, which include optical wave guides facing the flame region and image detectors coupled to the wave guides. The mentioned monitoring systems fulfil the requirements set by the standards and are capable of effectively preventing dangerous conditions which may result in continued fuel supply in the absence of flame, but the cost for implementation are high, especially when it comes to operate gas turbine engines with can or can-annular combustor structure. This is all the more true in consideration of the severe operating conditions of parts exposed to hot combustion gas. Relatively rapid ageing of hardware components may lead to false negative detections, meaning that the response of the flame detectors indicates flame extinction, while flame is actually present, instead. Even though such events do not normally result in imminent danger for structural integrity of the gas turbine engines, nevertheless unnecessary plant trips may be triggered and in any case relatively frequent maintenance is required, with severe increase of cost.

It has also been proposed to base flame monitoring on circumferential temperature distribution of exhaust gas using dedicated temperature sensors installed in the exhaust frame of gas turbine engines between the last expansion stage and the exhaust struts. Such a system relies on increased spread in the exhaust gas temperature in case of failure of one or more burner and positioning of the temperature sensors immediately downstream of the turbine aims at reducing exhaust gas mixing and maximizing positional correlation of burners and temperatures sensors. The solution, however, on the on side requires installing not only an additional set of temperature sensors, but also corresponding supporting structures to hold the temperature sensors in place in the exhaust gas flow within the exhaust frame of the gas turbine engine. Electrical connections need be provided as well. While providing an additional set of temperature sensors is not generally an issue in itself, positioning and electrical connection can be, because intervention on the structure of exhaust system is required. On the other side, known flame monitoring systems based on exhaust temperature suffer from possible false positive, since failure of a temperature sensor may not be distinguished from flame absence at a burner and would yield similar result in terms of detected temperature spread.

US 8 474 269 B2 discloses a gas turbine engine comprising a combustor assembly with a plurality of burners, an exhaust frame provided with a plurality of radial struts and an exhaust diffuser extending along a longitudinal axis downstream of the exhaust frame. Temperature sensors are arranged inside the exhaust diffuser downstream of the exhaust frame and of the struts at respective angular and radial positions with respect to the longitudinal axis. A control system is configured to detect flame failure at one or more of the burners based on responses of the temperature sensors in the exhaust diffuser and of additional sensors at the burners. The detection is based on determining a first and a second parameter as functions of the temperatures detected in the exhaust and at the burners, respectively, and on comparison of the parameters with respective thresholds.

Other examples of known gas turbine engines are disclosed in JP 2007 162531 A and US 2015/267591 A1.

### SUMMARY OF THE INVENTION

It is thus an object of the present invention to provide a gas turbine engine and a method of operating a gas turbine engine that allow to overcome or at least attenuate the above described limitations.

According to the present invention, there is provided a gas turbine engine comprising:
a combustor assembly including a plurality of burners;
an exhaust frame provided with a plurality of radial struts;
an exhaust diffuser extending along a longitudinal axis downstream of the exhaust frame;
a plurality of temperature sensors arranged inside the exhaust diffuser downstream of the exhaust frame and of the struts at respective angular and radial positions with respect to the longitudinal axis;
a control system configured to detect flame failure at one or more of the burners based on responses of the temperature sensors and a temperature threshold and on a redundant logic;
characterized in that the temperature sensors comprise:
   first temperature sensors, having a first faster response and arranged such that irregularities in temperature distribution in a circumferential direction caused by flame failure at any one of the burners affect a respective group of adjacent first temperature sensors; and
   second temperature sensors, having a second more accurate response;
   and wherein the control system is configured to determine flame failure at one or more of the burners based on the first responses of the first temperature sensors and on a M-out-of-N redundant logic in groups of adjacent first temperature sensors, wherein N is a number of first temperature sensors in each group and M is an integer lower than or equal to N-1.

The size of the exhaust diffuser offers many more opportunities to accommodate temperature sensors with required supports and connection. Thus, not only sensors arranged in the exhaust diffuser are normally not critical in designing gas turbine engines and do not have severe impact on the structure, but also installation and maintenance are simplified. Moreover, temperature sensors may be arranged in the exhaust diffusers also for the purpose of control, as exhaust temperature is an indicator of power delivered by the gas turbine engine. Therefore, it is possible either to exploit a single set of temperature sensors both for control and for flame monitoring, or to provide separate sets of dedicated temperature sensors sharing supports and connection paths. The sets of sensors may also have specifically selected characteristics, based on their function.

The use of redundant logic in groups of adjacent temperature sensors avoids or at least markedly reduces the risk of false positive detections of flame failure. In fact, malfunctions of individual temperature sensors result in low temperature readings and are not distinguishable from the effects of flame failure at one of the burners of the combustor. However, the temperature sensors may be easily placed in accordance with design preferences such that a cold spot deriving from an off burner affects a group of burners due to mixing in the hot gas path and in the upstream part of the exhaust diffuser. Since the control system assesses the temperature sensors in groups with a redundant logic, the effect of malfunctioning temperature sensors which individually would not meet flame presence criteria may be compensated by the other temperature sensors of the group. In other words, if the majority of temperature sensors in a group meets flame presence criteria (e.g. sensor response above a temperature threshold) in accordance with the redundant logic, possible temperature sensors which are lower than the flame presence criteria may be correctly identified as malfunctioning. Unnecessary plant trips may be thus avoided, without affecting safe operation of the gas turbine engine.

Dedicated first temperature sensors for the function of flame monitoring may be added to second temperature sensors already in place for gas turbine engine control. Besides sharing supporting and connection structures, characteristics of the first and second temperature sensor may be separately optimized based on the respective functions. First temperature sensors may be designed to respond quickly, because prompt detection of flame failure is needed to ensure timely triggering of protection measures and, ultimately, safe operation of the gas turbine engine. For the purpose of load control, instead, the need for accuracy of the second temperature sensors prevails over rapid response, because typical transients of gas turbine engines are not particularly demanding under this standpoint and are compatible with most sensors normally used, such as thermocouples.

An example of M-out-of-N redundant logic is 2-out-of-3 (2oo3) logic, whereby in groups of three sensors flame failure is detected only in case two or three first temperature sensors fail to meet flame presence criteria. Flame failure at one combustor burner reflects in a cold spot that spreads along the hot gas path and exhaust diffuser and affects groups of adjacent first temperature sensors, here three. Bad response of a single first temperature sensor is not sufficient to conclude for flame failure. Rather, bad response from a single first temperature sensor may be safely interpreted as sensor malfunctioning if in none of the groups of first temperature sensors flame failure is detected based on the 2-out-of-3 redundant logic. The above may be generalized to N-M malfunctioning first temperature sensors and M-out-of-N redundant logic.

According to an aspect of the invention, the exhaust diffuser comprises an outer casing and supporting rods extending radially inwards from the outer casing, wherein the first temperature sensors and the second temperature sensors are arranged on respective supporting rods.

In practice, the first temperature sensors are mounted to the same supports that are already provided for the second temperature sensors dedicated to load control, without adding to design complexity of the gas turbine engines.

According to an aspect of the invention, the supporting rods are located at a common axial location and are circumferentially distributed around the longitudinal axis And at least some of the supporting rods hold a respective one of the first temperature sensors and a respective one of the second temperature sensors each, preferably all the supporting rods holding one of the first temperature sensors hold also one of the second temperature sensors each.

Optimal positioning of the first temperature sensors may be thus achieved to ensure that groups of first sensors are consistently affected cold spots in exhaust gas caused by flame extinction even at a single burner.

According to an aspect of the invention, all the supporting rods holding one of the first temperature sensors hold also one of the second temperature sensors each.

Accordingly, only existing structures are exploited for mounting the first temperature sensors.

According to an aspect of the invention, the control system is configured to detect flame failure based on comparison of first responses of the first temperature sensors with a temperature threshold and the temperature threshold is determined from an average of the first responses of the first temperature sensors and a temperature offset.

The temperature threshold may be iteratively determined to account for dependence of the current average temperature e.g. on load conditions. The average may be calculated over a single sample of the first responses of the first temperature sensors as well as over a period of time, in accordance with design preferences.

According to the present invention there is also provided a method for controlling a gas turbine engine, the gas turbine engine comprising:
a combustor assembly including a plurality of burners;
an exhaust frame provided with a plurality of radial struts
an exhaust diffuser extending along a longitudinal axis downstream of the exhaust frame,
the method comprising:
   providing a plurality of temperature sensors inside the exhaust diffuser downstream of the exhaust frame and of the struts at respective angular and radial positions with respect to the longitudinal axis;
   detecting flame failure at one or more of the burners based on responses of the temperature sensors and a temperature threshold and on a redundant logic;
   characterized in that the temperature sensors comprise:
      first temperature sensors, having a first faster response and arranged such that irregularities in temperature distribution in a circumferential direction caused by flame failure at any one of the burners affect a respective group of adjacent first temperature sensors; and
      second temperature sensors, having a second more accurate response;
      and wherein detecting comprises determining flame failure based on the first responses of the first temperature sensors and applying M-out-of-N redundant logic in groups of adjacent first temperature sensors, wherein N is a number of first temperature sensors in each group and M is an integer lower than or equal to N-1.

### BRIEF DESCRIPTION OF THE DRAWINGS

The present invention will now be described with reference to the accompanying drawings, which illustrate some non-limitative embodiments thereof, in which:
- figure 1 is a simplified block diagram of a gas turbine engine in accordance with and embodiment of the present invention;
- figure 2 is a simplified cross-sectional side view of the gas turbine engine of figure 1;
- figure 3 is a cross-sectional front view of the gas turbine engine of figure 1, cut along plane III-III of figure 2;
- figure 4 is a schematic representation of burners in the gas turbine engine of figure 1 grouped for the purpose of flame monitoring;
- figure 5 and 6 are a graph showing quantities related to the gas turbine engine of figure 1 in different operating conditions.

### DETAILED DESCRIPTION OF EXEMPLARY EMBODIMENTS

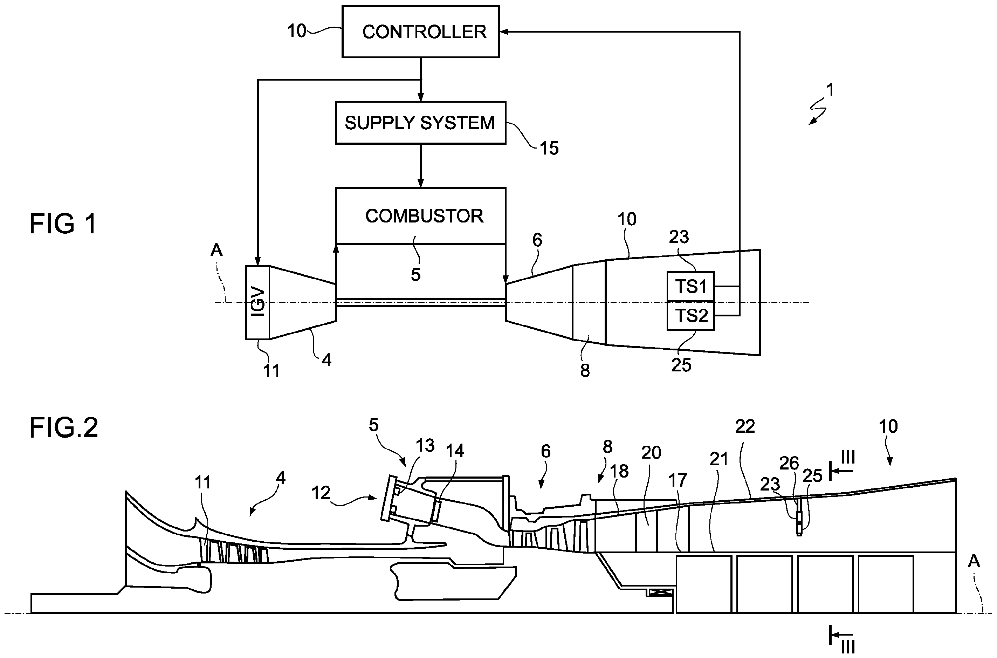

With reference to Figure 1, number 1 defines a gas turbine engine provided with a control system 3 and comprising a compressor 4, a combustor assembly 5, a turbine 6, an exhaust frame 8 and an axial exhaust diffuser 10, all extending about a longitudinal axis, which is indicated by A in figure 2. In one embodiment (not shown), the diffuser may be a radial diffuser. The gas turbine engine also comprises a fuel supply system 15 controlled by the control system 3.

The compressor 4 (figure 1) feeds the first combustor assembly 5 with a flow of compressed air drawn from outside. Air supply to the compressor 4 is controllable by the control system 3 by adjusting orientation of inlet guide vanes 11 of the compressor 4.

In one embodiment (figure 2), the first combustor assembly 5 is a sequential combustor and comprises a plurality of can combustors 12 circumferentially distributed about the longitudinal axis A. Each can combustor 12 comprises respective first stage burners 13 and second stage burner 14. However, the combustor assembly could be of a different type, for example a single stage can or can-annular combustor or a sequential or single stage annular combustor.

The can combustors 12 admix air from the compressor 4 and fuel from the fuel supply system 15 to form a mixture for combustion. The fuel may be gaseous, for example natural gas or syngas, or liquid, for example gasoil. The gas turbine engine 1 can be structured to use different types of fuel, both gaseous and liquid. Fuel supply is controllable by the control system 3 through the fuel supply system 15.

The turbine 6 receives and expands a flow of hot gas from the combustor assembly 5 to extract mechanical work, which is transferred to an external user, typically an electric generator, here not shown.

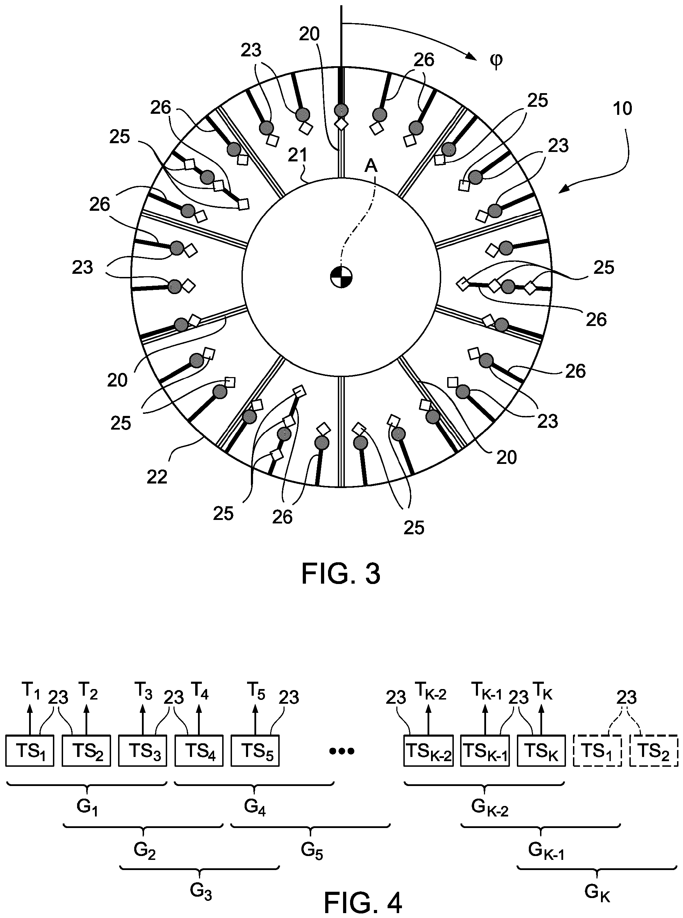

The hot gas is then conveyed through the exhaust frame 8 and the exhaust diffuser 10. The exhaust frame 8 is arranged immediately downstream of the turbine 8 and comprises an inner casing 17, an outer casing 18 and a plurality of struts 20, for example ten. The struts extend radially from the inner casing 17 to the outer casing 18, shown in figure 3 and are uniformly spaced in a circumferential direction. One of the struts 20, e.g. extending in a vertical plane in an upper portion of the exhaust frame 8, defines a reference for angular position ϕ about the longitudinal axis A of the gas turbine engine 1.

The exhaust diffuser 10 extends along the longitudinal axis A downstream of the exhaust frame 8 and comprises an inner casing 21 and an outer casing 22 that define a portion of a flow path for exhaust gas.

The exhaust diffuser 10 also comprises a plurality of temperature sensors, which are therefore arranged downstream of the exhaust frame 8 and of the struts 20 at respective angular and radial positions with respect to the longitudinal axis A. Specifically, the temperature sensors comprise first temperature sensors 23 for the purpose of flame monitoring and second temperature sensors 25 for the purpose of load control (Temperature After Turbine or TAT measurements). The first temperature sensors 23 and the second temperature sensors 25 are mounted on supporting rods 26 that extend radially inwards from the outer casing 22 at a common axial location, also defined TAT plane. The supporting rods 26 are distributed in a circumferential direction, not necessarily in a uniform manner. In one embodiment, each supporting rod 26 holds a respective first temperature sensor 23 and at least one second temperature sensors 25, while special supporting rods 26 longer than the others hold three second temperature sensors 25 each. It is however understood that some of the supporting rods 26 my hold only first temperature sensors 23 or second temperature sensors 25. The first temperature sensors 23 are arranged at a first common radial position at the same first distance from the longitudinal axis A; likewise, the second temperature sensors 25, possibly except those on the longer supporting rods 26, are arranged at a second common radial position at the same second distance from the longitudinal axis A. In any case the number and angular and radial positions of the first temperature sensors 23 are selected such that a irregularities in temperature distribution in circumferential direction caused by flame failure at any one of the burners 13, 14 (cold spots) affects a respective group of adjacent first temperature sensors 23.

The characteristic and specifically a first response of the first temperature sensors 23 and a second response of the second temperature sensors 25 may be selected based on the specific functions for which the temperature sensors are provided. In particular, the first response of the first temperature sensors 23 (for flame supervision purpose) is faster than the second response of the second temperature sensors 25, whereas the second response of the second temperature sensors 25 (for load control purpose) is more accurate than the first response of the first temperature sensors 23.

The control system 3 is configured to operate the gas turbine engine 1 in accordance with received load request. The definition "control system" as used herein is to be broadly understood as meaning a system supervising all functions and operation of the gas turbine, including at least control or regulation functions, such as load control, determining set-points and driving actuators to reach the set-points, primary and secondary frequency control, and protection functions, including flame monitoring and protection against flame failure. In particular, a control system may comprise a first subsystem for control functions and a second subsystem for protection functions.

The control system 3 determines set-points for the gas turbine engine 1 so that the load request may be met and, based on determined set-points and feedback signals from selected sensors and/or detectors, including the second responses of the second temperature sensors 25, it drives the inlet guide vanes 11 of the compressor 4 and the fuel supply system 15.

The control system 3 also implements a flame monitoring function at any one of the burners 13, 14 based on the first responses of the first temperature sensors 23 and on a redundant logic. Specifically, the control system 3 is configured to detect flame failure based on a M-out-of-N redundant logic in groups of adjacent first temperature sensors 23, wherein N is a number of first temperature sensors in each group and M is an integer lower than or equal to N-1. In one embodiment, N is 3, M is 2 and the redundant logic is a 2-out-of-3 logic.

As illustrated schematically in figure 4, where the first temperature sensors 23 are individually further identified as TS₁, ... TS_{K}, the control system 3 defines K groups G₁, ..., G_{K} of N adjacent first temperature sensors 23, wherein K is the overall number of first temperature sensors 23 in the exhaust diffuser 10. Each group G₁, ..., G_{K} includes N respective adjacent first temperature sensors 23 and each first temperature sensor 23 belongs to N different groups G₁, ..., G_{K}. In other words, each sensor 23 is the first member by angular position ϕ of a respective group G₁, ..., G_{K}: TS₁ is the first member of group G₁, that includes first temperature sensors TS₁, TS₂, TS₃; TS₂ is the first member of group G₂, that includes first temperature sensors TS₂, TS₃, TS₄; and so on until TS_{K-1}, which is the first member of group G_{K-1}, that includes first temperature sensors TS_{K-1}, TS_{K}, TS₁; and TS_{K}, which is the first member of group G_{K}, that includes first temperature sensors TS_{K}, TS₁, TS₂.

The control system 3 detects flame failure based on comparison of the first responses, that include respective monitoring signals identified as T₁, ..., T_{K} in figures 4-6, of the first temperature sensors 23 with a temperature threshold T_{TH}, which is determined from an average of the first responses T₁, ..., T_{K} of the first temperature sensors 23 and a temperature offset ΔT. The temperature threshold may be iteratively updated and may be calculated e.g. over a single sample of the monitoring signals T₁, ..., T_{K} of the first temperature sensors 23 or over samples collected in a period of time.

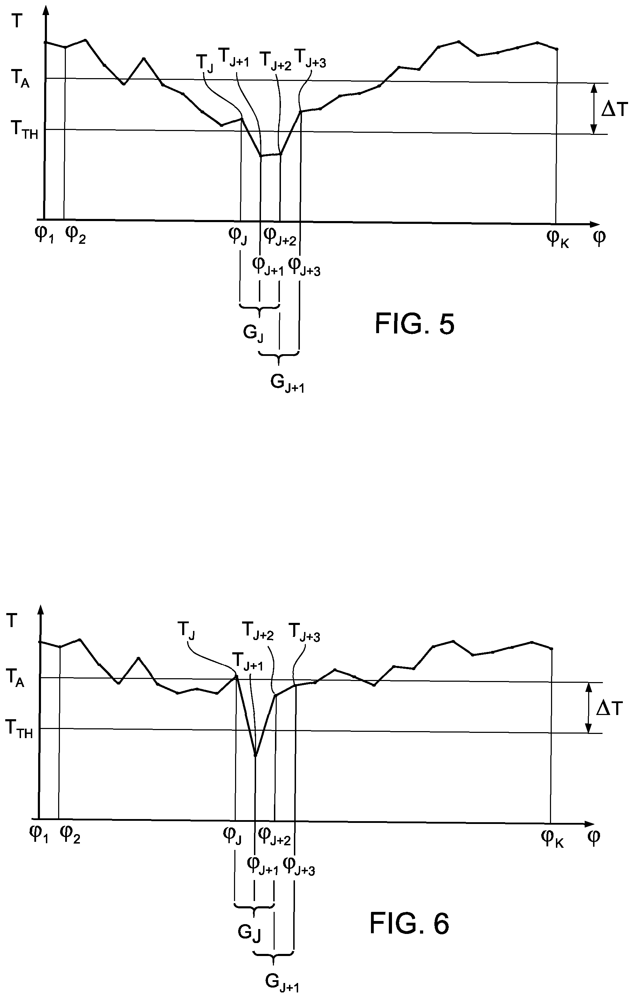

With a 2-out-of-3 logic (generally M-out-of-N), the control system 3 detects flame failure if in at least one group G₁, ..., G_{K} of first temperature sensors 23 the first responses, specifically the monitoring signals T₁, ..., T_{K}, of 2 (generally M-1) first temperature sensors 23 of the group are lower than the temperature threshold T_{TH}. Flame failure at one of the burners 13, 14 causes a cold spot that results in increased temperature spread of the exhaust gas and affects measurements of adjacent first temperature sensors 23, which are remarkably lower than the average. Flame failure is recognized when at least M (two in the embodiment described) adjacent first temperature sensors 23 give monitoring signals T₁, ..., T_{K} below the temperature threshold T_{TH}, while it not required that all the first temperature sensors 23 in a group fail the test. In the example of figure 5, the monitoring signals T_{J+1} and T_{J+1} of the temperature sensors 23 at angular positions ϕ_{J+1} an ϕ_{J+2} are below and thus fail the comparison with the temperature threshold T_{TH} and thus fail the comparison. Groups G_{J} and G_{J+1} contain both the temperature sensors 23 at angular positions ϕ_{J+1} and ϕ_{J+2}, while all the other groups contain at most one of them. In fact, group G_{J} contains the temperature sensors 23 at angular positions ϕ_{J}, ϕ_{J+1}, ϕ_{J+2} and group G_{J+1} contains the temperature sensors 23 at angular positions ϕ_{J+1} ϕ_{J+2}, ϕ_{J+3}. Thus, based on 2-out-of-3 redundant logic, the control system 3 detects flame failure at one of the burners 13, 14. In the example of figure 6, instead, only the temperature sensor 23 at angular position ϕ_{J+1}, is below the temperature threshold T_{TH}. Based on 2-out-of-3 redundant logic the anomalous measurement may be identified as a false positive because it is not consistent with the measurements of adjacent first temperature sensors 23.

It is finally apparent that changes and variations may be made to the gas turbine engine and method described and illustrated without departing from the scope of protection of the accompanying claims.

In one embodiment, for example, only one set of temperature sensors may be used both for the purpose of flame monitoring and load control. This solution may be particularly advantageous if the responses of the available sensors is fast and accurate enough to meet design preferences for both control and flame monitoring functions.

It is also understood that the number and angular and radial positioning of temperature sensors involved in flame monitoring may be different from those described, provided that a group of adjacent sensors (and not a single one) is affected by cold spots as a consequence of the arrangement.

## Claims

1. A gas turbine engine comprising:
a combustor assembly (5) including a plurality of burners (13, 14);
an exhaust frame (8) provided with a plurality of radial struts (20);
an exhaust diffuser (10) extending along a longitudinal axis (A) downstream of the exhaust frame (8);
a plurality of temperature sensors (23, 25) arranged inside the exhaust diffuser (10) downstream of the exhaust frame (8) and of the struts (20) at respective angular and radial positions with respect to the longitudinal axis (A);
a control system (3) configured to detect flame failure at one or more of the burners (13, 14) based on responses of the temperature sensors (23, 25) and a temperature threshold (T_{TH}) and on a redundant logic;
**characterized in that** the temperature sensors (23, 25) comprise:
first temperature sensors (23), having a first faster response and arranged such that irregularities in temperature distribution in a circumferential direction caused by flame failure at any one of the burners (13, 14) affect a respective group of adjacent first temperature sensors (23); and
second temperature sensors (25), having a second more accurate response;
and wherein the control system (3) is configured to determine flame failure at one or more of the burners (13, 14) based on the first responses of the first temperature sensors (23) and on a M-out-of-N redundant logic in groups (G₁, ..., G_{K}) of adjacent first temperature sensors (23), wherein N is a number of first temperature sensors (23) in each group (G₁, ..., G_{K}) and M is an integer lower than or equal to N-1.

2. The gas turbine engine according to claim 1, comprising a compressor (4) and a fuel supply system (15), wherein the control system (3) is configured to control compressor (4) air intake and fuel supply combustor to the combustor assembly (5) based on the second responses of the second temperature sensors (25).

3. The gas turbine engine according to claim 1 or 2, wherein the exhaust diffuser (10) comprises an outer casing (22) and supporting rods (26) extending radially inwards from the outer casing (22), wherein the first temperature sensors (23) and the second temperature sensors (25) are arranged on respective supporting rods (26).

4. The gas turbine engine according to claim 3, wherein the supporting rods (26) are located at a common axial location and are circumferentially distributed around the longitudinal axis (A) and at least some of the supporting rods (26) hold a respective one of the first temperature sensors (23) and a respective one of the second temperature sensors (25) each, preferably all the supporting rods (26) holding one of the first temperature sensors (23) hold also one of the second temperature sensors (25) each.

5. The gas turbine engine according to any one of the preceding claims, wherein the control system (3) is configured to define K groups (G₁, ..., G_{K}) of N adjacent first temperature sensors (23), wherein K is a number of first temperature sensors (23) in the exhaust diffuser (10), each group (G₁, ..., G_{K}) includes N respective adjacent first temperature sensors (23) and each first temperature sensor belongs to N different groups (G₁, ..., G_{K}).

6. The gas turbine engine according to any one of the preceding claims, wherein the control system (3) is configured to detect flame failure based on comparison of first responses of the first temperature sensors (23) with the temperature threshold (T_{TH}) and the temperature threshold (T_{TH}) is determined from an average of the first responses of the first temperature sensors (23) and a temperature offset (ΔT).

7. The gas turbine engine according to claim 6, wherein the control system (3) is configured to detect flame failure if in at least one group (G₁, ..., G_{K}) of first temperature sensors (23) the first responses of M-1 first temperature sensors (23) of the group (G₁, ..., G_{K}) are lower than the temperature threshold (T_{TH}).

8. Method for controlling a gas turbine engine, the gas turbine engine (1) comprising:
a combustor assembly (5) including a plurality of burners (13, 14);
an exhaust frame (8) provided with a plurality of radial struts (20)
an exhaust diffuser (10) extending along a longitudinal axis (A) downstream of the exhaust frame (8),
the method comprising:
providing a plurality of temperature sensors inside the exhaust diffuser (10) downstream of the exhaust frame (8) and of the struts (20) at respective angular and radial positions with respect to the longitudinal axis (A);
detecting flame failure at one or more of the burners (13, 14) based on responses of the temperature sensors and a temperature threshold (T_{TH}) and on a redundant logic;
**characterized in that** the temperature sensors (23, 25) comprise:
first temperature sensors (23), having a first faster response and arranged such that irregularities in temperature distribution in a circumferential direction caused by flame failure at any one of the burners (13, 14) affect a respective group of adjacent first temperature sensors (23); and
second temperature sensors (25), having a second more accurate response;
and wherein detecting comprises determining flame failure based on the first responses of the first temperature sensors (23) and applying M-out-of-N redundant logic in groups (G₁, ..., G_{K}) of adjacent first temperature sensors (23), wherein N is a number of first temperature sensors (23) in each group (G₁, ..., G_{K}) and M is an integer lower than or equal to N-1.

9. The method according to claims 8, comprising controlling a load of the gas turbine engine (1) based on the second responses of the second temperature sensors (25).

10. The method according to claim 8 or 9, wherein detecting comprises defining K groups (G₁, ..., G_{K}) of N adjacent first temperature sensors (23), wherein K is a number of first temperature sensors (23) in the exhaust diffuser (10), each group (G₁, ..., G_{K}) includes N respective adjacent first temperature sensors (23) and each first temperature sensor belongs to N different groups (G₁, ..., G_{K}).

## Patentansprüche

1. Gasturbinenmotor, umfassend:
eine Brennkammeranordnung (5), die eine Vielzahl von Brennern (13, 14) umfasst;
einen Abgasrahmen (8), der mit einer Vielzahl von radialen Streben (20) versehen ist;
einen Abgasdiffusor (10), der sich entlang einer Längsachse (A) stromabwärts des Abgasrahmens (8) erstreckt;
eine Vielzahl von Temperatursensoren (23, 25), die innerhalb des Abgasdiffusors (10) stromabwärts des Abgasrahmens (8) und der Streben (20) an entsprechenden Winkel- und radialen Positionen in Bezug auf die Längsachse (A) eingerichtet sind;
ein Steuersystem (3), das dazu ausgestaltet ist, Flammenausfall an einem oder mehreren der Brenner (13, 14) basierend auf Reaktionen der Temperatursensoren (23, 25) und einem Temperaturschwellenwert (T_{TH}) und auf einer redundanten Logik festzustellen;
**dadurch gekennzeichnet, dass** die Temperatursensoren (23, 25) umfassen:
erste Temperatursensoren (23), die eine erste, schnellere Reaktion aufweisen und derart eingerichtet sind, dass Unregelmäßigkeiten bei der
Temperaturverteilung in einer Umfangsrichtung, die durch Flammenausfall an einem beliebigen von den Brennern (13, 14) verursacht werden, eine entsprechende Gruppe von benachbarten ersten Temperatursensoren (23) beeinflussen; und
zweite Temperatursensoren (25), die eine zweite, genauere Reaktion aufweisen;
und wobei das Steuersystem (3) dazu ausgestaltet ist, Flammenausfall an einem oder mehreren der Brenner (13, 14) basierend auf den ersten Reaktionen der ersten Temperatursensoren (23) und auf einer redundanten M-von-N-Logik in Gruppen (G₁, ..., G_{K}) von benachbarten ersten Temperatursensoren (23) zu bestimmen, wobei N eine Anzahl von ersten Temperatursensoren (23) in jeder Gruppe (G₁, ..., G_{K}) ist und M eine ganze Zahl kleiner als oder gleich N-1 ist.

2. Gasturbinenmotor nach Anspruch 1, der einen Verdichter (4) und ein Brennstoffzufuhrsystem (15) umfasst, wobei das Steuersystem (3) dazu ausgestaltet ist, Lufteinlass des Verdichters (4) und Brennstoffzufuhr-Brennkammer zur Brennkammeranordnung (5) basierend auf den zweiten Reaktionen der zweiten Temperatursensoren (25) zu steuern.

3. Gasturbinenmotor nach Anspruch 1 oder 2, wobei der Abgasdiffusor (10) ein äußeres Gehäuse (22) und Stützstäbe (26) umfasst, die sich radial von dem äußeren Gehäuse (22) nach innen erstrecken, wobei die ersten Temperatursensoren (23) und die zweiten Temperatursensoren (25) auf entsprechenden Stützstäben (26) eingerichtet sind.

4. Gasturbinenmotor nach Anspruch 3, wobei die Stützstäbe (26) sich an einer gemeinsamen axialen Stelle befinden und in Umfangsrichtung um die Längsachse (A) verteilt sind und mindestens einige der Stützstäbe (26) jeweils einen entsprechenden der ersten Temperatursensoren (23) und einen entsprechenden der zweiten Temperatursensoren (25) halten, wobei vorzugsweise alle Stützstäbe (26), die einen der ersten Temperatursensoren (23) halten, jeweils auch einen der zweiten Temperatursensoren (25) halten.

5. Gasturbinenmotor nach einem der vorhergehenden Ansprüche, wobei das Steuersystem (3) dazu ausgestaltet ist, K Gruppen (G₁, ..., G_{K}) von N benachbarten ersten Temperatursensoren (23) zu definieren, wobei K eine Anzahl von ersten Temperatursensoren (23) in dem Abgasdiffusor (10) ist, jede Gruppe (G₁, ..., G_{K}) N entsprechende benachbarte erste Temperatursensoren (23) umfasst und jeder erste Temperatursensor zu N unterschiedlichen Gruppen (G₁, ..., G_{K}) gehört.

6. Gasturbinenmotor nach einem der vorhergehenden Ansprüche, wobei das Steuersystem (3) dazu ausgestaltet ist, Flammenausfall basierend auf Vergleich von ersten Reaktionen der ersten Temperatursensoren (23) mit dem Temperaturschwellenwert (T_{TH}) festzustellen, und der Temperaturschwellenwert (T_{TH}) von einem Durchschnitt der ersten Reaktionen der ersten Temperatursensoren (23) und einem Temperaturversatz (ΔT) bestimmt wird.

7. Gasturbinenmotor nach Anspruch 6, wobei das Steuersystem (3) dazu ausgestaltet ist, Flammenausfall festzustellen, wenn in mindestens einer Gruppe (G₁, ..., G_{K}) von ersten Temperatursensoren (23) die ersten Reaktionen von M-1 ersten Temperatursensoren (23) von der Gruppe (G₁, ..., G_{K}) niedriger sind als der Temperaturschwellenwert (T_{TH}).

8. Verfahren zum Steuern eines Gasturbinenmotors, wobei der Gasturbinenmotor (1) umfasst:
eine Brennkammeranordnung (5), die eine Vielzahl von Brennern (13, 14) umfasst;
einen Abgasrahmen (8), der mit einer Vielzahl von radialen Streben (20) versehen ist;
einen Abgasdiffusor (10), der sich entlang einer Längsachse (A) stromabwärts des Abgasrahmens (8) erstreckt;
wobei das Verfahren umfasst:
Bereitstellen einer Vielzahl von Temperatursensoren im Inneren des Abgasdiffusors (10) stromabwärts des Abgasrahmens (8) und der Streben (20) an entsprechenden Winkel- und radialen Positionen in Bezug auf die Längsachse (A);
Feststellen von Flammenausfall an einem oder mehreren der Brenner (13, 14) basierend auf Reaktionen der Temperatursensoren und einem Temperaturschwellenwert (T_{TH}) und auf einer redundanten Logik;
**dadurch gekennzeichnet, dass** die Temperatursensoren (23, 25) umfassen:
erste Temperatursensoren (23), die eine erste, schnellere Reaktion aufweisen und derart eingerichtet sind, dass Unregelmäßigkeiten bei der Temperaturverteilung in einer Umfangsrichtung, die durch Flammenausfall an einem beliebigen der Brenner (13, 14) verursacht werden, eine entsprechende Gruppe von benachbarten ersten Temperatursensoren (23) beeinflussen; und
zweite Temperatursensoren (25), die eine zweite, genauere Reaktion aufweisen;
und wobei das Feststellen das Bestimmen von Flammenausfall basierend auf den ersten Reaktionen der ersten Temperatursensoren (23) und das Anwenden redundanter M-von-N-Logik in Gruppen (G₁, ..., G_{K}) von benachbarten ersten Temperatursensoren (23) umfasst,
wobei N eine Anzahl von ersten Temperatursensoren (23) in jeder Gruppe (G₁, ..., G_{K}) ist und M eine ganze Zahl kleiner als oder gleich N-1 ist.

9. Verfahren nach Anspruch 8, welches das Steuern einer Last des Gasturbinenmotors (1) basierend auf den zweiten Reaktionen der zweiten Temperatursensoren (25) umfasst.

10. Verfahren nach Anspruch 8 oder 9, wobei das Feststellen das Definieren von K Gruppen (G₁, ..., G_{K}) von N benachbarten ersten Temperatursensoren (23) umfasst, wobei K eine Anzahl von ersten Temperatursensoren (23) in dem Abgasdiffusor (10) ist, jede Gruppe (G₁, ..., G_{K}) N entsprechende benachbarte erste Temperatursensoren (23) umfasst und jeder erste Temperatursensor zu N unterschiedlichen Gruppen (G₁, ..., G_{K}) gehört.

## Revendications

1. Moteur à turbine à gaz comprenant :
un ensemble chambre de combustion (5) comprenant une pluralité de brûleurs (13, 14) ;
un cadre d'échappement (8) pourvu d'une pluralité d'entretoises radiales (20) ;
un diffuseur d'échappement (10) s'étendant le long d'un axe longitudinal (A) en aval du cadre d'échappement (8) ;
une pluralité de capteurs de température (23, 25) disposés à l'intérieur du diffuseur d'échappement (10) en aval du cadre d'échappement (8) et des entretoises (20) à des positions angulaires et radiales respectives par rapport à l'axe longitudinal (A) ;
un système de commande (3) configuré pour détecter une défaillance de flamme au niveau d'un ou plusieurs des brûleurs (13, 14) sur la base des réponses des capteurs de température (23, 25) et d'un seuil de température (T_{TH}) et d'une logique redondante ;
**caractérisé en ce que** les capteurs de température (23, 25) comprennent :
des premiers capteurs de température (23), ayant une première réponse plus rapide et disposés de telle sorte que les irrégularités de distribution de température dans une direction circonférentielle provoquées par une défaillance de flamme au niveau de l'un quelconque des brûleurs (13, 14) affectent un groupe respectif de premiers capteurs de température (23) adjacents ; et
des deuxièmes capteurs de température (25), ayant une deuxième réponse plus précise ;
et dans lequel le système de commande (3) est configuré pour déterminer une défaillance de flamme au niveau d'un ou plusieurs des brûleurs (13, 14) sur la base des premières réponses des premiers capteurs de température (23) et d'une logique redondante M de N dans des groupes (G₁, ...,G_{K}) de premiers capteurs de température (23) adjacents, où N est un nombre de premiers capteurs de température (23) dans chaque groupe (G₁, ...,G_{K}) et M est un entier inférieur ou égal à N-1.

2. Moteur à turbine à gaz selon la revendication 1, comprenant un compresseur (4) et un système d'alimentation en carburant (15), dans lequel le système de commande (3) est configuré pour commander l'admission d'air du compresseur (4) et l'alimentation en carburant de chambre de combustion de l'ensemble chambre de combustion (5) sur la base des deuxièmes réponses des deuxièmes capteurs de température (25).

3. Moteur à turbine à gaz selon la revendication 1 ou 2, dans lequel le diffuseur d'échappement (10) comprend un boîtier externe (22) et des tiges de support (26) s'étendant radialement vers l'intérieur à partir du boîtier externe (22), dans lequel les premiers capteurs de température (23) et les deuxièmes capteurs de température (25) sont disposés sur des tiges de support respectives (26).

4. Moteur à turbine à gaz selon la revendication 3, dans lequel les tiges de support (26) sont situées à un emplacement axial commun et sont réparties circonférentiellement autour de l'axe longitudinal (A) et au moins certaines des tiges de support (26) maintiennent chacun l'un respectif des premiers capteurs de température (23) et l'un respectif des deuxièmes capteurs de température (25), de préférence toutes les tiges de support (26) maintenant chacune l'un des premiers capteurs de température (23) maintiennent également l'un des deuxièmes capteurs de température (25).

5. Moteur à turbine à gaz selon l'une quelconque des revendications précédentes, dans lequel le système de commande (3) est configuré pour définir K groupes (G₁, ...,G_{K}) de N premiers capteurs de température (23) adjacents, où K est un nombre de premiers capteurs de température (23) dans le diffuseur d'échappement (10), chaque groupe (G₁, ...,G_{K}) comprend N premiers capteurs de température (23) adjacents respectifs et chaque premier capteur de température appartient à N groupes différents (G₁, ...,G_{K}).

6. Moteur à turbine à gaz selon l'une quelconque des revendications précédentes, dans lequel le système de commande (3) est configuré pour détecter une défaillance de flamme sur la base de la comparaison des premières réponses des premiers capteurs de température (23) au seuil de température (T_{TH}) et le seuil de température (T_{TH}) est déterminé à partir d'une moyenne des premières réponses des premiers capteurs de température (23) et d'un décalage de température (ΔT).

7. Moteur à turbine à gaz selon la revendication 6, dans lequel le système de commande (3) est configuré pour détecter une défaillance de flamme si, dans au moins un groupe (G₁, ..., G_{K}) de premiers capteurs de température (23) les premières réponses de M-1 premiers capteurs de température (23) du groupe (G₁, ..., G_{K}) sont inférieures au seuil de température (T_{TH}).

8. Procédé de commande d'un moteur à turbine à gaz, le moteur à turbine à gaz (1) comprenant :
un ensemble chambre de combustion (5) comprenant une pluralité de brûleurs (13, 14) ;
un cadre d'échappement (8) pourvu d'une pluralité d'entretoises radiales (20)
un diffuseur d'échappement (10) s'étendant le long d'un axe longitudinal (A) en aval du cadre d'échappement (8),
le procédé comprenant :
la fourniture d'une pluralité de capteurs de température à l'intérieur du diffuseur d'échappement (10) en aval du cadre d'échappement (8) et des entretoises (20) à des positions angulaires et radiales respectives par rapport à l'axe longitudinal (A) ;
la détection d'une défaillance de flamme au niveau d'un ou plusieurs des brûleurs (13, 14) sur la base des réponses des capteurs de température et d'un seuil de température T_{TH} et d'une logique redondante ;
**caractérisé en ce que** les capteurs de température (23, 25) comprennent :
des premiers capteurs de température (23), ayant une première réponse plus rapide et disposés de telle sorte que les irrégularités de distribution de température dans une direction circonférentielle provoquées par une défaillance de flamme au niveau de l'un quelconque des brûleurs (13, 14) affectent un groupe respectif de premiers capteurs de température (23) adjacents ; et
des deuxièmes capteurs de température (25), ayant une deuxième réponse plus précise ;
et dans lequel la détection comprend la détermination d'une défaillance de flamme sur la base des premières réponses des premiers capteurs de température (23) et d'une logique redondante M de N dans des groupes (G₁, ...,G_{K}) de premiers capteurs de température (23) adjacents, où N est un nombre de premiers capteurs de température (23) dans chaque groupe (G₁, ...,G_{K}) et M est un entier inférieur ou égal à N-1.

9. Procédé selon la revendication 8, comprenant la commande d'une charge du moteur à turbine à gaz (1) sur la base des deuxièmes réponses des deuxièmes capteurs de température (25).

10. Procédé selon la revendication 8 ou 9, dans lequel la détection comprend la définition de K groupes (G₁, ..., G_{K}) de N premiers capteurs de température adjacents (23), dans lequel K est un nombre de premiers capteurs de température (23) dans le diffuseur d'échappement (10), chaque groupe (G₁, ..., G_{K}) comprend N premiers capteurs de température (23) adjacents respectifs et chaque premier capteur de température appartient à N groupes différents (G₁, ..., G_{K}).
